# EUROPÄISCHE PATENTSCHRIFT

(11) **EP 3 884 506 B1**
(45) Veröffentlichungstag und Bekanntmachung des Hinweises auf die Patenterteilung: **09.08.2023**
(21) Anmeldenummer: 19787226.0
(22) Anmeldetag: 14.10.2019
(51) Int. Cl.: H01F 7/02, G01D 5/14

(54) **PERMANENTMAGNETISCHER GEBER FÜR EINE SENSORVORRICHTUNG, SENSORVORRICHTUNG UND BEDIENVORRICHTUNG ZUR BEDIENUNG EINES FAHRZEUGS**
PERMANENT MAGNET ENCODER FOR A SENSOR APPARATUS, SENSOR APPARATUS AND CONTROL DEVICE FOR CONTROLLING A VEHICLE
ENCODEUR À AIMANT PERMANENT POUR UN CAPTEUR, CAPTEUR ET DISPOSITIF DE COMMANDE POUR PILOTER UN VÉHICULE

(30) Priorität: 19.11.2018 DE 102018219777
(43) Veröffentlichungstag der Anmeldung: 29.09.2021
(73) Patentinhaber: ZF Friedrichshafen AG, 88046 Friedrichshafen (DE)
(72) Erfinder: HERZOG, Stefan, 88682 Salem (DE); TENCKHOFF, Georg, 88048 Friedrichshafen (DE)
(74) Vertreter: ZF Friedrichshafen AG
(86) Internationale Anmeldenummer: PCT/EP2019/077678
(87) Internationale Veröffentlichungsnummer: WO 2020/104108

(56) Entgegenhaltungen:
- EP-A1- 1 939 592
- DE-A1-102013 204 752
- DE-A1-102014 004 625
- DE-B3-102015 001 553

## Beschreibung

Die Erfindung betrifft einen permanentmagnetischen Geber für eine Sensorvorrichtung mit einem ersten Permanentmagnet und einem damit verbundenen zweiten Permanentmagnet. Die Erfindung betrifft außerdem eine Sensorvorrichtung mit einem solchen permanentmagnetischen Geber. Und die Erfindung betrifft eine Bedienvorrichtung zur Bedienung eines Fahrzeugs, aufweisend eine bewegliche Stellelement und einen permanentmagnetischen Geber zur Ermittlung einer Stellposition des Stellelements.

Winkelsensoren auf Hall- oder MR-Basis (MR = magnetoresistiv) benötigen als Geber einen Magneten. Dieser erzeugt neben dem gewollten magnetischen Nutzfeld ein Streufeld. Dieses Streufeld kann unerwünscht sein, wenn zum Beispiel weitere magnetfeldsensitive Einrichtungen in der Nähe des Sensors zum Einsatz kommen sollen. Als Anwendung seien hier der Gashebel und der Kompass eines Wasser-oder Luftfahrzeugs genannt. Ein permanentmagnetischer Geber zur Ermittlung der Stellposition des Gashebels darf am Ort des Kompasses beispielsweise nur noch eine Flussdichte von 94nT erzeugen, damit dessen Winkelabweichung zum Erdmagnetfeld nicht unzulässig groß wird. Aus dieser Forderung ergibt sich ein Mindestabstand zwischen Geber und Kompass der eingehalten werden muss, um diese geringe Flussdichte zu gewährleisten. Dieser Abstand wird in Normen (EN60945, EN ISO694, ETSI EN 303 098-1) mit "Compass safe distance", kurz CSD, bezeichnet.

Aus der DE 10 2015 001 553 B3 ist eine Sensorvorrichtung zur Unterdrückung eines magnetischen Streufeldes bekannt. Hierbei ist ein Magnet mit vier Magnetpolen vorgesehen, wobei zwei äußere Magnetpole des Magneten zwei innere Magnetpole des Magneten als Kreissegmente umschließen. Zudem ist ein dem Magneten zugeordneter Halbleiterkörper vorgesehen, der eine erste Pixelzelle und eine davon beabstandete zweite Pixelzelle aufweist. Die beiden Pixelzellen enthalten jeweils zwei Magnetfeldsensoren, wobei der erste Magnetfeldsensor Magnetfelder in einer x-Richtung detektiert und der zweite Magnetfeldsensor Magnetfelder in einer dazu orthogonale y-Richtung detektiert.

Ein solcher Halbleiterkörper wird in der Praxis auch als differentieller Magnetfeldsensor bezeichnet. Die Messwerte beider Pixelzellen werden hierbei nämlich typi-scherweise miteinander verrechnet, um den Einfluss externer Störfelder, die gleich große Störungen bei beiden Pixelzellen verursachen, zu eliminieren.

Aus der DE 10 2013 204 752 A1 ist ein hydrostatischer Aktor bekannt, der eine Getriebespindel mit zwei zueinander drehbaren Elementen umfasst. Am ersten Element ist ein Magnetelement und am zweiten Element sind ein erster Magnetfeldsensor zur Bestimmung einer absoluten Winkelposition der beiden Elemente sowie ein zweiter Magnetfeldsensor zur Bereitstellung eines auf eine vorbestimmte Rotationslage der beiden Elemente hinweisenden Signals angebracht. Um eine größere Anzahl steigender und fallender Flanken pro Umdrehung des ersten Elements zu erzielen, können mehrere zweite Magnetfeldsensoren umfasst sein, die in Umfangsrichtung im Bereich des Magneten versetzt sind. In einer anderen Ausführungsform kann ein koaxialer Ring vom zweiten Magneten bereitgestellt sein, wobei der zweite Magnetfeldsensor im Bereich der zweiten Magneten angeordnet ist.

Aufgabe der Erfindung ist es, den Stand der Technik zu verbessern. Insbesondere soll das Streufelds eines permanentmagnetischen Gebers so weit kompensiert werden, dass der Geber in der Nähe eines Kompasses oder einer anderen Magnetfeldempfindlichen Einrichtung betreibbar ist, ohne dass deren Funktion durch den Geber beeinträchtigt wird.

Diese Aufgabe wird durch die in den Hauptansprüchen jeweils angegebenen Gegenstände gelöst. Bevorzugte Ausführungsformen hiervon sind den Unteransprüchen entnehmbar.

Dementsprechend werden, wie eingangs bereits erläutert, ein permanentmagnetischer Geber mit einem ersten Permanentmagnet und einem damit verbundenen zweiten Permanentmagnet vorgeschlagen. Zudem wird eine Sensorvorrichtung mit einer Sensoranordnung und mit einem zur Sensoranordnung beabstandeten und relativ dazu beweglichen permanentmagnetischen Geber vorgeschlagen, wobei die Sensoranordnung zur Sensierung des Magnetfelds des Gebers ausgebildet ist.

Zudem wird eine Bedienvorrichtung zur Bedienung eines Fahrzeugs vorgeschlagen, aufweisend ein bewegliches Stellelement und aufweisend ein Mittel zur Ermittlung einer Stellposition des Stellelements.

Der vorgeschlagene permanentmagnetische Geber weist einen ersten Permanentmagnet und einen damit verbundenen zweiten Permanentmagnet auf; vorzugsweise ist kein weiterer Permanentmagnet vorgesehen. Die genannten beiden Permanentmagnete sind also insbesondere direkt miteinander oder über einen Träger zueinander fixiert und nur im Verbund miteinander beweglich. Der erste Permanentmagnet ist auf einer gemeinsamen Ausrichtungsebene von dem zweiten Permanentmagneten umgeben. Das bedeutet, dass der erste Permanentmagnet auf der Ausrichtungsebene innenliegend bezüglich des zweiten Permanentmagneten angeordnet ist. Der erste Permanentmagnet weist ein erstes Magnetfeld mit einer ersten (Nord-Süd-)Ausrichtung in der Ausrichtungsebene auf. Der zweite Permanentmagnet weist demgegenüber ein zweites Magnetfeld mit einer anderen, zweiten (Nord-Süd-)Ausrichtung in der Ausrichtungsebene auf. Diese zweite Ausrichtung ist der ersten Ausrichtung entgegengesetzt. Somit liegt auf der Ausrichtungsebene ein Nordpol des ersten Permanentmagneten einem Südpol des zweiten Permanentmagneten gegenüber und umgekehrt. Die Magnetisierung der beiden Permanentmagnete ist also beispielsweise um 180° zueinander gedreht.

Bei einer ersten Ausführungsform des vorgeschlagenen permanentmagnetischen Gebers ist als kennzeichnendes Merkmal vorgesehen, dass der erste und zweite Permanentmagnet im Wesentlichen dasselbe magnetische Dipolmoment aufweisen. Der Betrag des magnetischen Dipolmoments des ersten Permanentmagneten entspricht dann im Wesentlichen dem Betrag des magnetischen Dipolmoments des zweiten Permanentmagneten, wobei die Dipolmomente der Permanentmagnete wegen der unterschiedlichen Ausrichtungen allerdings einander entgegengesetzt sind. Dies wird dadurch erreicht, dass das Produkt aus (magnetischer) Remanenz und (geometrischem) Volumen bei den Permanentmagneten durch entsprechende Maßnahmen im Wesentlichen identisch ist. Dies bedeutet insbesondere, dass die Beträge der magnetischen Dipolmomente der Permanentmagnete um maximal 10% voneinander abweichen, und besonders bevorzugt um maximal 5% voneinander abweichen. Als Maßnahmen steht eine entsprechende Auswahl der Werkstoffe, der Magnetisierung und der Geometrie der Permanentmagnete zur Verfügung. Diese Auswahl kann beispielsweise durch eine Computersimulation der magnetischen Eigenschaften der Permanentmagnete unterstützt werden.

Bei einer zweiten Ausführungsform des vorgeschlagenen permanentmagnetischen Gebers ist als kennzeichnendes Merkmal vorgesehen, dass der erste und zweite Permanentmagnet auf der Ausrichtungsebene voneinander beabstandet angeordnet sind. Es ist zwischen den beiden Permanentmagneten dann also stets ein gewisser radialer Abstand vorgesehen. Vorzugsweise beträgt der Abstand zwischen den Permanentmagneten mehr als 0,5 mm. Das kennzeichnende Merkmal der zweiten Ausführungsform kann bei einem permanentmagnetischen Geber entweder alternativ zum kennzeichnenden Merkmal der ersten Ausführungsform vorgesehen sein oder es kann zusätzlich zum kennzeichnenden Merkmal der ersten Ausführungsform vorgesehen sein.

Sowohl bei der ersten Ausführungsform, als auch bei der zweiten Ausführungsform des Gebers können magnetische Streufelder des Gebers sehr gut kompensiert werden. Somit ist eine CSD des Gebers signifikant reduziert. Die CSD ist um ein Vielfaches kleiner, als wenn nur ein einziger Permanentmagnet bei dem Geber eingesetzt werden würde.

Vorzugsweise ist der erste Permanentmagnet als eigentlicher Gebermagnet, dessen Magnetfeld von einer Sensoranordnung sensiert werden soll, ausgebildet und kann als solcher bezeichnet werden. Der zweite Permanentmagnet dient dann zur Kompensation der Fernwirkung des (ersten) Magnetfeldes des ersten Permanentmagneten. Der zweite Permanentmagnet kann als Ringmagnet ausgebildet sein. Eine Ausbreitung des von dem Geber erzeugten (Gesamt-)Magnetfeldes über das Nahfeld hinaus kann damit deutlich reduziert werden.

Vorzugsweise ist - sofern vorgesehen - der Abstand zwischen dem ersten Permanentmagnet und dem zweiten Permanentmagnet als Luftspalt ausgebildet. Dies ermöglicht eine besonders kostengünstige Variante des Gebers. Alternativ dazu kann in dem Abstand zwischen den beiden Permanentmagneten ein anderes nichtferromagnetisches Material vorgesehen sein. Beispielsweise können die beiden Permanentmagnete mit einem nicht-ferromagnetischen Werkstoff umschlossen sein, der auch den Spalt dazwischen einnimmt. Auf diese Weise kann auch die Verbindung der Permanentmagnete einfach erzeugt werden.

Vorzugsweise bestehen der erste Permanentmagnet und der zweite Permanentmagnet aus demselben Werkstoff. In diesem Fall ist die magnetische Remanenz der beiden Permanentmagnete auf Grund des Werkstoffes in der Regel identisch. Um ein vom Betrag her gleiches magnetisches Dipolmoment zu erzeugen ist dann lediglich ein identisches Volumen der Permanentmagnete erforderlich.

Alternativ dazu bestehen der erste Permanentmagnet und der zweite Permanentmagnet aus zueinander unterschiedlichen Werkstoffen. Damit kann einer der Permanentmagnete aus einem kostengünstigen Werkstoff bestehen und der andere kann aus einem wertvolleren Werkstoff bestehen. Mit dieser Maßnahme kann auch die Ausrichtung der Magnetfelder des Gebers vereinfacht werden. Eine hierbei mögliche unterschiedliche Remanenz der Permanentmagnete kann durch eine entsprechende Wahl der Volumen der Permanentmagnete ausgeglichen werden, sodass das Produkt aus Remanenz und Volumen weiterhin für beide Permanentmagnete gleich ist und somit gleiche Dipolmomente vorliegen.

Durch eine geschickte Werkstoffpaarung kann die Magnetisierung des Gebers auch erst nach seiner Montage vorgenommen werden. Dies reduziert die Gefahr, ferromagnetische Schmutzpartikel anzuziehen und damit den Geber bereits bei seiner Herstellung zu verunreinigen. Außerdem erleichtert dies die exakt entgegengesetzte Ausrichtung der Magnetisierung der beiden Permanentmagnete. Bevorzugt besteht einer der beiden Permanentmagnete hierzu aus Ferrit und der andere der beiden Permanentmagnete aus NdFeB, also einer Legierung aus Neodym, Eisen und Bor. Beide Permanentmagnete können dabei gesintert sein. Es kann zunächst mit einer (hohen) ersten Magnetisierfeldstärke die Magnetisierung beider Permanentmagnete gleich ausgerichtet werden. Anschließend kann mit einer niedrigeren zweiten Magnetisierfeldstärke (beispielsweise kann diese etwa halb so groß sein wie im Schritt zuvor) die Magnetisierung in einem der beiden Permanentmagnete umkehrt werden, insbesondere im Permanentmagneten aus Ferrit. Dadurch ergibt sich eine exakt entgegengesetzte Ausrichtung der Magnetfelder der beiden Permanentmagnete.

Vorzugsweise ist der erste Permanentmagnet scheibenförmig ausgebildet ist, und der zweite Permanentmagnet ist dann ringförmig ausgebildet. Beide Permanentmagnete sind dabei flach auf der Ausrichtungsebene angeordnet. Das bedeutet, dass die flachen Stirnseiten der Permanentmagnet parallel zu der Ausrichtungsebene liegen. Der zweite Permanentmagnet umgibt hierbei den ersten Permanentmagnet auf der Ausrichtungsebene. Der zweite Permanentmagnet ist also auf der Ausrichtungsebene ringförmig um den ersten Permanentmagneten herum angeordnet. Vorzugsweise sind die beiden Permanentmagnete dann außerdem konzentrisch zueinander angeordnet. Somit ergibt sich ebenfalls eine besonders gute Kompensation der magnetischen Streufelder.

Bei der vorgeschlagenen Sensorvorrichtung ist als Geber der vorgeschlagene permanentmagnetische Geber vorgesehen. Die Sensorvorrichtung kann dadurch in großer Nähe zu einem Kompass oder zu einer anderen für Magnetfelder empfindlichen Einrichtung eingesetzt werden.

Bei einer Relativbewegung zwischen dem Geber und der Sensoranordnung der vorgeschlagenen Sensorvorrichtung verändert sich das vom Geber erzeugte Magnetfeld an einem magnetfeldsensitiven Bereich der Sensoranordnung. Dies kann eine Änderung der magnetischen Feldstärke und/oder Flussdichte und/oder Flussrichtung sein. Durch diese Änderung kann auf die jeweilige Relativposition zwischen Geber und Sensoranordnung geschlossen werden. Außerdem kann auf die Geschwindigkeit und Beschleunigung einer Relativbewegung zwischen Geber und Sensoranordnung geschlossen werden. Die Sensorvorrichtung ist somit sowohl zur Ermittlung einer Position, als auch einer Geschwindigkeit, als auch einer Beschleunigung oder anderer damit zusammenhängender Werte nutzbar. Beispielsweise kann der Geber auf einem beweglichen Bauteil fest angeordnet sein, während die Sensoranordnung ortsfest angeordnet ist. Dadurch kann eine Drehung oder Verschiebung des Bauteils in Relation zur Sensoranordnung erkannt werden.

Die Sensoranordnung kann genau (also nur) diesen einen magnetfeldsensitiven Bereich aufweist. Dieser magnetfeldsensitive Bereich kann eine Pixelzelle sein. Der magnetfeldsensitive Bereich dient zur örtlichen Sensierung des von dem Geber erzeugten (Gesamt-)Magnetfeldes, insbesondere in genau eine Raumrichtung oder in mehrere Raumrichtungen. Unter einer solchen Sensierung wird insbesondere die Ermittlung einer magnetischen Feldstärke und/oder Flussdichte und/oder Flussrichtung verstanden. Durch diese Maßnahme wird die Sensoranordnung einfach im Aufbau und damit kostengünstig. Ein zweiter oder weitere magnetfeldsensitive Bereiche können zwar bei anderen Ausführungsformen der vorgeschlagenen Sensorvorrichtung vorgesehen sein, dies ist für viele Anwendungen jedoch nicht erforderlich. Folglich kann die vorgeschlagene Sensoranordnung also als ein einfacher Sensor mit nur einem magnetfeldsensitiven Bereich ausgeführt sein.

Die Sensoranordnung kann durch einen Halbleiterkörper oder einen anderweitigen Schaltungsträger gebildet sein (wie beispielsweise ein Chip), der zumindest einen oder nur den einen magnetfeldsensitiven Bereich zur Sensierung des Magnetfelds des Gebers aufweist. Die Sensoranordnung wird insbesondere durch einen Hall-Sensor oder einen MR-Sensor gebildet. Das Messprinzip eines Hall-Sensors basiert bekanntermaßen auf dem Hall-Effekt. Das Messprinzip eines MR-Sensors basiert bekanntermaßen auf einem anderen magnetoresistiven Effekt, wie beispielsweise dem anisotrope magnetoresistive Effekt oder dem Riesenmagnetowiderstand. Die Sensoranordnung kann beispielsweise durch einen Hall-Sensor des Typs HAL 3735 der TDK-Micronas GmbH oder durch einen MR-Sensor des Typs TLE5109 der Infineon Technologies AG gebildet sein.

Die Relativposition des Gebers und eines oder des einen magnetfeldsensitiven Bereichs der Sensoranordnung ist bevorzugt so gewählt, dass der nominale Einfluss des zweiten Permanentmagneten in Bezug auf die Sensoranordnung im Wesentlichen verschwindet. Die Sensorfunktion wird dann also durch den zusätzlichen zweiten Permanentmagneten des Gebers kaum (nicht störend) beeinträchtigt. Der Abstand zwischen dem ersten Permanentmagnet und einem oder dem einen magnetfeldsensitiven Bereich der Sensoranordnung beträgt dazu vorzugsweise 1 mm bis 4 mm.

Bevorzugt ist der Geber um eine Drehachse drehbar ausgebildet. Die Permanentmagnete des Gebers sind dabei insbesondere so ausgerichtet, dass ihre Ausrichtungsebene orthogonal zu der Drehachse liegt. Die Drehachse durchstößt die Ausrichtungsebene also senkrecht. Die Sensoranordnung ist dann insbesondere so angeordnet, dass ein oder der eine magnetfeldsensitive Bereich der Sensoranordnung auf der Drehachse des Gebers liegt oder zumindest in der Nähe der Drehachse, wie beispielsweise im Abstand von weniger als 5 mm zur Drehachse. Auf diese Weise kann mittels der Sensorvorrichtung sehr effektiv eine Drehposition und/oder davon ableitbare Größen (Drehgeschwindigkeit, Drehbeschleunigung etc.) ermittelt werden.

Die vorgeschlagene Bedienvorrichtung dient zur Bedienung eines Fahrzeugs, wie insbesondere eines Luftfahrzeugs oder eines Wasserfahrzeugs. Ein Luftfahrzeug ist beispielsweise ein Hubschrauber oder ein Flugzeug. Ein Wasserfahrzeug ist beispielsweise ein Schiff oder ein Boot. Solche Fahrzeuge verfügen regelmäßig oder sogar vorschriftsmäßig über einen Kompass zur Navigation. Auch bei Landfahrzeugen werden zunehmend Navigationssysteme eingesetzt, die zumindest in Verbindung mit einem Kompass funktionieren. Ein solcher Kompass sollte möglichst ausfallsicher sein und darf nicht durch umliegende Einrichtungen gestört werden. Dies gilt vor allem bei Luft- oder Wasserfahrzeugen, da er dort häufig als Hauptnavigationsinstrument oder zumindest als Notfalllösung zu anderen Navigationsinstrumenten eingesetzt wird. Daher ist die CSD stets einzuhalten.

Die vorgeschlagene Bedienvorrichtung dient zur Bedienung einer bestimmten Anlage des Fahrzeugs, wie insbesondere einer Ruderanlage oder einer Antriebsmaschine. Die Bedienvorrichtung kann insbesondere als Steuerkonsole oder Steuerstand ausgebildet sein. Die Bedienvorrichtung weist ein bewegliches Stellelement auf. Das Stellelement ist insbesondere zur manuellen Bewegung ausgebildet, also zur Bedienung und entsprechenden Bewegung durch einen menschlichen Benutzer der Bedienvorrichtung. Durch die dadurch eingestellte Stellposition des Stellelements wird eine entsprechende Steuervorgabe an die Anlage des Fahrzeugs erzeugt. Bei dem Stellelement kann es sich insbesondere um ein Steuerrad für eine Ruderanlage oder einen Gashebel für eine Antriebsmaschine des Fahrzeugs handeln oder um ein anderes Bauteil, dass damit verbunden ist und stets entsprechend mitbewegt wird.

Die vorgeschlagene Bedienvorrichtung verfügt zur Ermittlung der Stellposition des Stellelements über den vorgeschlagenen Geber selbst oder über die vorgeschlagene Sensorvorrichtung mit diesem Geber. Durch diese Maßnahme kann die CSD signifikant reduziert werden. Ein Kompass kann also relativ nahe zum Geber platziert sein. Der Geber ist bevorzugt direkt mit dem Stellelement verbunden. Beispielsweise ist der Geber darauf angeordnet und fixiert.

Vorzugsweise weist die Bedienvorrichtung den Kompass gleich mit auf. Der Abstand zwischen Kompass und Geber beträgt hierbei 10 cm bis 30 cm. Ein derart geringer Abstand kann durch die Merkmale des vorgeschlagenen Gebers sicher realisiert werden. Dadurch kann eine besonders kompakte Bedienvorrichtung geschaffen werden, bei der alle zum Betrieb des Fahrzeugs notwendigen Instrumente und Stellelemente auf engem Raum angeordnet sind.

Im Folgenden wird die Erfindung anhand von Figuren näher erläutert, aus denen weitere bevorzugte Ausführungsformen und Merkmale der Erfindung entnehmbar sind. Hierbei zeigen jeweils in schematischer Darstellung:
Fig. 1 eine Ausführung einer Sensorvorrichtung mit einem permanentmagnetischen Geber,
Fig. 2 eine andere Ausführung einer Sensorvorrichtung mit einem permanentmagnetischen Geber,
Fig. 3 eine weitere Ausführung einer Sensorvorrichtung mit einem permanentmagnetischen Geber,
Fig. 4 ein Verlauf einer Flussdichte eines magnetischen Fernfeldes eines permanentmagnetischen Gebers,
Fig. 5 ein Verlauf einer Flussdichte eines magnetischen Nahfeldes eines permanentmagnetischen Gebers,
Fig. 6 eine Bedienvorrichtung zur Bedienung eines Fahrzeugs.

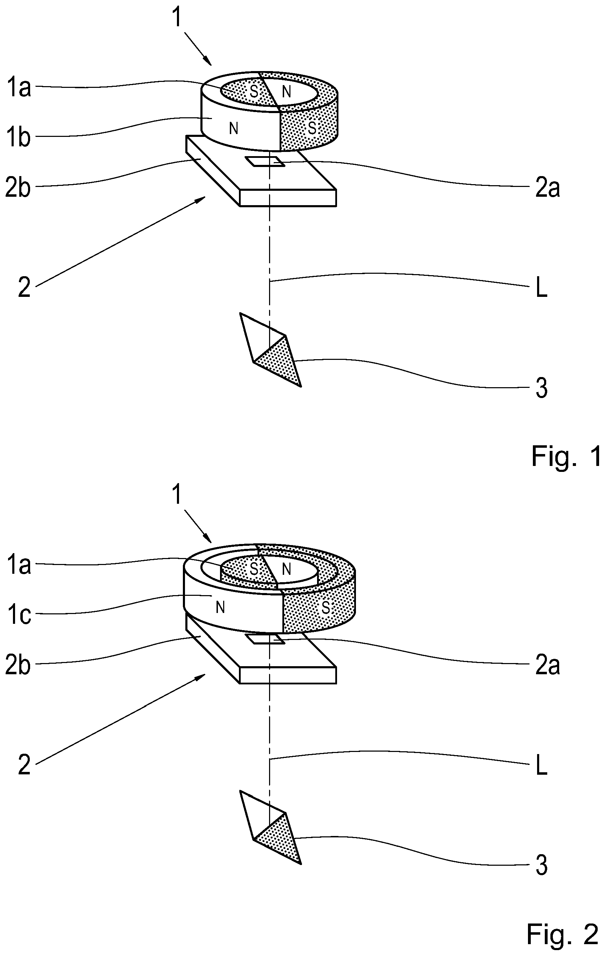

Fig. 1 zeigt eine bevorzugte Ausführungsform einer Sensorvorrichtung mit einem permanentmagnetischen Geber 1. Die Sensorvorrichtung dient zur Ermittlung einer Stellposition des Gebers 1 bezüglich einer Sensoranordnung 2 der Sensorvorrichtung. Im vorliegenden Fall ist die Stellposition eine Winkelposition zwischen Geber 1 und Sensoranordnung 2. Demnach ist der Geber 1 bezüglich der Sensoranordnung 2 um eine Drehachse L drehbar ausgeführt. Demnach kann die Sensorvorrichtung auch als Winkelsensor bezeichnet werden. Im Bedarfsfall können zudem oder alternativ die von der Winkelposition ableitbaren Größen ermittelt werden, wie insbesondere eine Drehgeschwindigkeit und/oder eine Drehbeschleunigung.

Die Sensoranordnung 2 verfügt über genau oder zumindest einen magnetfeldsensitiven Bereich 2a, mittels dessen eine örtliche magnetische Feldstärke und/oder Flussdichte und/oder Flussrichtung des vom Geber 1 erzeugte (Gesamt-)Magnetfelds. Der magnetfeldsensitive Bereich 2a befindet sich auf oder zumindest in der Nähe der Drehachse L des Gebers 1. Zwischen dem Bereich 2a und dem Geber 1 ist ein Abstand vorgesehen, üblicherweise ein Luftspalt. Ein bevorzugter, jedoch nicht zwangsläufig erforderlicher Abstand zwischen dem Bereich 2a und dem Geber 1 beträgt 1 mm bis 4 mm, insbesondere 3,4 mm.

Der magnetfeldsensitive Bereich 2a ist auf einem Schaltungsträger 2b, wie insbesondere einem Chip, angeordnet. Der Schaltungsträger 2b kann selbst wiederum auf einer Leiterplatte oder dergleichen angeordnet sein. Der magnetfeldsensitive Bereich 2a und gegebenenfalls der Schaltungsträger 2b können Teil eines konventionellen Hall- oder MR-Sensors sein.

Der magnetfeldsensitive Bereich 2a ist bevorzugt mit einer nicht gezeigten Auswertungsvorrichtung elektrisch kontaktiert, die zur Auswertung der von dem magnetfeldsensitiven Bereich 2a ermittelten Messwerte dient. Die eigentliche Ermittlung der Stellposition erfolgt insbesondere erst durch diese Auswertungsvorrichtung. Die Auswertungsvorrichtung kann Teil der Sensoranordnung 2 sein, oder sie kann separat dazu vorgesehen sein. Die Auswertungsvorrichtung kann als Mikrocontroller ausgebildet sein.

Der Geber 1 besteht aus einem ersten, inneren und scheibenförmigen Permanentmagnet 1a und einem zweiten, äußeren und ringförmigen Permanentmagnet 1b. Diese sind beide flach auf einer Ausrichtungsebene angeordnet sind. Die Ausrichtungsebene liegt orthogonal zu der Drehachse L des Gebers 1. Der zweite Permanentmagnet 1b umgibt somit auf der Ausrichtungsebene den ersten Permanentmagneten 1a. Die beiden Permanentmagnete 1a, 1b sind konzentrisch bezüglich der Drehachse L angeordnet. Die Permanentmagnete 1a, 1b sind miteinander verbunden. Dies bedeutet, dass sie direkt miteinander oder mittels eines Trägers zueinander fixiert sind, und sie sind demnach nur gemeinsam bewegbar. Bei der Ausführungsform gemäß Fig. 1 ist ein radialer Abstand zwischen den Permanentmagneten 1a, 1b vernachlässigbar klein. Die Permanentmagneten 1a, 1b liegen gemäß Fig. 1 insbesondere unmittelbar aneinander an.

Der erste Permanentmagnet 1a weist ein erstes Magnetfeld mit einer ersten Nord-Süd-Ausrichtung in der Ausrichtungsebene auf. Der zweite Permanentmagnet 1b weist ein zweites Magnetfeld mit einer anderen, zweiten Ausrichtung in der Ausrichtungsebene auf. Diese Ausrichtungen sind entgegengesetzt. Somit ist einem Nordpol einer der beiden Permanentmagnete 1a, 1b jeweils ein Südpol des anderen der beiden Permanentmagnete 1a, 1b entgegengesetzt. Da im vorliegenden Beispiel beide Permanentmagnete 1a, 1b zweipolig ausgebildet sind, sind deren Magnetfelder um 180° zueinander gedreht. Die Permanentmagnete 1a, 1b könnten auch über mehr als zwei Pole verfügen. Dann wären sie nur um einen entsprechenden Betrag zueinander verdreht, sodass ihre Magnetfelder einander entgegen gerichtet wären.

Die beiden Permanentmagnete 1a, 1b weisen dasselbe Produkt aus magnetischer Remanenz und geometrischem Volumen auf. Somit ergeben sich für beide Permanentmagnete 1a, 1b vom Betrag her gleiche magnetische Dipolmomente, die sich zumindest hinsichtlich der magnetischen Fernwirkung des Gebers 1 gegenseitig aufheben. Die beiden Permanentmagnete 1a, 1b können aus demselben oder aus unterschiedlichen Werkstoffen bestehen.

Durch diese Maßnahmen wird ein magnetisches Fernfeld des Gebers 1 deutlich abgeschwächt. Gleichzeitig bleibt ein magnetisches Nahfeld des Gebers 1 soweit erhalten, dass damit im Bereich des magnetfeldsensitiven Bereichs 2a weiterhin die Stellposition zwischen Geber 1 und Sensoranordnung 2 ermittelbar ist. Ein in einem bestimmten Abstand zum Geber 1 positionierter Kompass 3 wird durch das magnetische Fernfeld des Gebers 1 also nicht beeinflusst. Der Abstand kann dementsprechend klein sein. Die CSD der Sensorvorrichtung ist entsprechend klein. Die Sensorvorrichtung sowie der Geber 1 eignen sich daher besonders dort zum Einsatz, wo ein Kompass zur Navigation typischerweise vorhanden oder vorgeschrieben ist, wie insbesondere bei einer Bedienvorrichtung zur Bedienung eines Luft- oder Wasserfahrzeugs.

Fig. 2 zeigt eine weitere bevorzugte Ausführungsform einer Sensorvorrichtung mit einem permanentmagnetischen Geber 1. Es gelten hierbei die Erläuterungen zur Ausführungsform gemäß Fig. 1. Der zweite Permanentmagnet ist in Fig. 2 mit dem Bezugszeichen 1c versehen. Der einzige substantielle Unterschied zwischen den Ausführungsformen nach Fig. 1 und Fig. 2 besteht darin, dass beim Geber 1 gemäß Fig. 2 die Permanentmagnete 1a, 1c um einen Abstand auf der Ausrichtungsebene voneinander entfernt sind. Hierdurch wird ein Spalt zwischen den Permanentmagneten 1a, 1c gebildet, der typischerweise als Luftspalt ausgebildet ist. Hierdurch kann die Wirkung des äußeren, zweiten Permanentmagneten 1c verbessert werden und damit das magnetische Fernfeld des Gebers 1 (weiter) abgeschwächt werden. Gleichzeitig verringert sich der Einfluss des zweiten Permanentmagneten 1c auf das magnetische Nahfeld am magnetfeldsensitiven Bereich 2a. Der Abstand zwischen den beiden Permanentmagnete 1a, 1c beträgt insbesondere mehr als 0,5 mm.

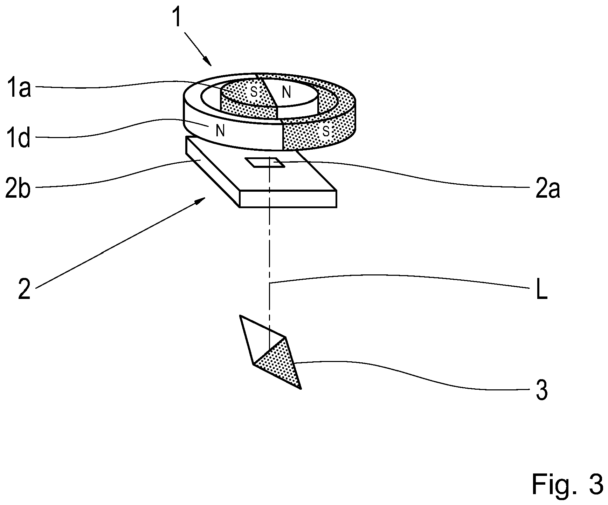

Fig. 3 zeigt eine weitere bevorzugte Ausführungsform einer Sensorvorrichtung mit einem permanentmagnetischen Geber 1. Es gelten hierbei die Erläuterungen zur Ausführungsform gemäß Fig. 1 und Fig. 2. Der zweite Permanentmagnet ist in Fig. 2 mit dem Bezugszeichen 1d versehen. Der einzige substantielle Unterschied zwischen den Ausführungsformen nach Fig. 1 und Fig. 3 besteht darin, dass beim Geber 1 gemäß Fig. 3 die Permanentmagnete 1a, 1d um einen radialen Abstand voneinander entfernt sind (wie in Fig. 2) und dass die Permanentmagnete 1a, 1d aus unterschiedlichen Werkstoffen bestehen. Beispielsweise besteht der erste Permanentmagnet 1a aus gesintertem Ferrit und der zweite Permanentmagnet 1d aus gesintertem NdFeB, oder umgekehrt. Die somit unterschiedlichen magnetischen Remanenzen der Permanentmagnete 1a, 1d werden durch unterschiedliche Volumina der Permanentmagnete 1a, 1d ausgeglichen, sodass das Produkt aus Remanenz und Volumen auch hier gleich ist.

Zur Erzeugung der Magnetisierung des Gebers 1 kann hier nun zunächst mit einer hohen Magnetisierfeldstärke die Magnetisierung beider Permanentmagnete 1a, 1d gleich ausgerichtet werden. Anschließend kann mit einer niedrigeren Magnetisierfeldstärke (beispielsweise etwa halb so groß) die Magnetisierung einer der beiden Permanentmagnete 1a, 1d um 180° gedreht werden, insbesondere die Magnetisierung des Permanentmagneten 1a, 1d aus Ferrit.

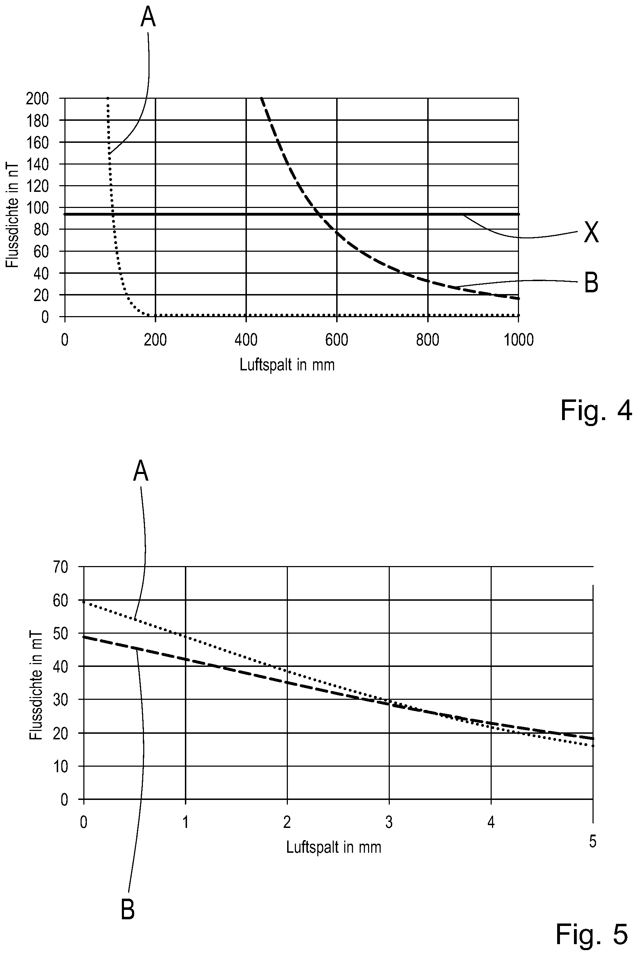

Fig. 4 zeigt ein Diagramm, das die Fernwirkung eines vorgeschlagenen permanentmagnetischen Gebers (= Linie A) mit den beiden Permanentmagneten 1a, 1b oder 1a, 1c oder 1a, 1d im Vergleich zu einem konventionellen permanentmagnetischen Geber (= Linie B), der nur aus einem einzigen scheibenförmigen Permanentmagneten 1a besteht, verdeutlicht. Auf einer senkrechten Achse des Diagramms ist eine magnetische Flussdichte in nT des vom jeweiligen Geber erzeugten magnetischen Fernfeldes aufgetragen. Auf einer waagerechten Achse ist eine Entfernung (Luftspalt) in mm von dem jeweiligen Geber aufgetragen. Als Referenzwert ist ein maximaler Pegel (94 nT) für eine CSD als Linie X in das Diagramm eingetragen. Dieser Pegel darf im Bereich eines Kompasses eines Wasserfahrzeugs nicht überschritten werden. Der Pegel bestimmt somit einen Mindestabstand, der zwischen dem jeweiligen Geber und dem Kompass konstruktiv einzuhalten ist.

Mit der Linie A ist in Fig. 4 der Verlauf der vom vorgeschlagenen Geber erzeugten Flussdichte in Abhängigkeit der Entfernung eingetragen. Hieraus ist ersichtlich, dass bereits bei einer Entfernung von ca. 100 mm die Linie X unterschritten wird. Die CSD für den vorgeschlagenen Geber beträgt somit ca. 100 mm. Mit zunehmender Entfernung fällt die Flussdichte weiter stark ab, sodass ab einer Entfernung von ca. 200 mm keine nennenswerte magnetische Flussdichte bei dem vorgeschlagenen Geber vorhanden ist.

Mit der Linie B ist in Fig. 4 demgegenüber der Verlauf der vom konventionellen Geber erzeugten Flussdichte in Abhängigkeit der Entfernung eingetragen. Hieraus ist ersichtlich, dass erst bei einer Entfernung von ca. 560 mm die Linie X unterschritten wird. Die CSD für diesen konventionellen Geber beträgt somit ca. 560 mm. Selbst bei einer Entfernung von 1000 mm ist noch eine magnetische Flussdichte von ca. 16 nT feststellbar.

Fig. 5 zeigt ein Diagramm, das die Nahwirkung eines vorgeschlagenen permanentmagnetischen Gebers (= Linie A) mit den beiden Permanentmagneten 1a, 1b oder 1a, 1c oder 1a, 1d im Vergleich zu einem konventionellen permanentmagnetischen Geber (= Linie B), der nur aus einem einzigen scheibenförmigen Permanentmagneten 1a besteht, verdeutlicht. Auf einer senkrechten Achse des Diagramms ist wieder eine magnetische Flussdichte in mT des vom jeweiligen Geber erzeugten magnetischen Feldes aufgetragen. Auf einer waagerechten Achse ist wieder eine Entfernung (Luftspalt) in mm von dem jeweiligen Geber aufgetragen.

Aus dem dicht beieinanderliegenden Verlauf der beiden Linien A, B ist ersichtlich, dass sich der zweite Permanentmagnet (Ringmagnet) beim vorgeschlagenen Geber kaum auf das magnetische Nahfeld des Gebers auswirkt. Im Entfernungsbereich von 0 mm bis 3 mm weist das vom vorgeschlagenen Geber erzeugte Nahfeld sogar eine etwas erhöhte Flussdichte im Vergleich zum konventionellen Geber auf. Der Abstand zwischen Geber und zugehöriger Sensoranordnung beträgt typischerweise 1 mm bis 4 mm. Somit kann mit dem vorgeschlagenen Geber bei einem typischen Anwendungsfall ebenso gut eine Stellposition bestimmt werden, wie mit dem konventionellen Geber.

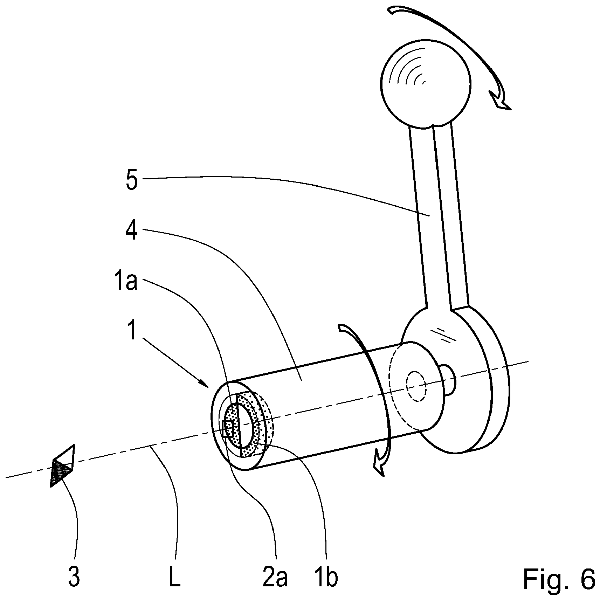

Fig. 6 zeigt einen beispielhaften Anwendungsfall der in Fig. 1 gezeigten Sensorvorrichtung und des Gebers 1 bei einer Bedienvorrichtung zur Bedienung eines Fahrzeugs, wie insbesondere eines Wasserfahrzeugs. Hierbei ist der Geber 1 der Sensorvorrichtung, aufweisend die Permanentmagnete 1a, 1b, mit einer Welle 4 fest gekoppelt. Die Welle 4 ist zusammen mit dem Geber 1 drehbar um die Drehachse L gelagert. Die gegenüber zu dem Geber 1 befindliche Sensoranordnung, von der in Fig. 6 lediglich der magnetfeldsensitive Bereich 2a gezeigt ist, ist hingegen fest in der Bedienvorrichtung verbaut. Der Geber 1 ist zusammen mit der Welle 4 also um die Drehachse L relativ zum magnetfeldsensitiven Bereich 2a der Sensoranordnung drehbar. Der Abstand zwischen dem magnetfeldsensitiven Bereich 2a und dem Geber 1 beträgt insbesondere 1 mm bis 4 mm. Die feste Koppelung zwischen Geber 1 und Welle 3 kann beliebig ausgeführt sein, beispielsweise kann sie durch Kleben, Einpressen, Umspritzen der Welle 4 oder Einspritzen der Permanentmagnete 1a, 1b erfolgen.

Zur besseren Übersicht ist in Fig. 6 der Schaltungsträger der Sensoranordnung, auf dem sich der magnetfeldsensitive Bereich 2a befindet, nicht gezeigt. Er entspricht dem Schaltungsträger 2b gemäß Fig. 1. Anstelle der des Gebers 1 gemäß Fig. 1 kann auch ein Geber 1 gemäß Fig. 2 oder Fig. 3 eingesetzt werden.

Die Welle 4 ist mit einer Bedienmittel 5 fest verbunden und bildet ein Stellelement der Bedienvorrichtung. Im vorliegenden Beispiel ist das Bedienmittel 5 als Handhebel ausgeführt. Das Bedienmittel 5 dient beispielsweise als ein Gashebel. Somit kann ein Benutzer der Bedienvorrichtung das Bedienmittel 5 schwenken und damit über die Stellposition (Schwenkposition) eine entsprechende Steuervorgabe für eine Anlage des Fahrzeugs vorgeben. Das Schwenken bewirkt eine Drehung der Welle 4 und des Gebers 1 um die Drehachse L. Dementsprechend verändert sich nun die örtliche magnetischen Feldstärke und/oder Flussdichte und/oder Flussrichtung im Bereich des magnetfeldsensitiven Bereichs 2a. Dies kann von dem magnetfeldsensitiven Bereich 2a gemessen werden. Der Messwert wird in einer mit dem magnetfeldsensitiven Bereich 2a elektrisch kontaktierten Auswertungsvorrichtung ausgewertet und somit die Stellposition ermittelt. Diese Stellposition entspricht der jeweiligen Steuervorgabe des Benutzers.

Durch den den ersten Permanentmagneten 1a umgebenden zweiten Permanentmagneten 1b in Verbindung mit dem gleichen Dipolmoment der Permanentmagnete 1a, 1b und/oder dem gezielt vorgesehenen Abstand zwischen den beiden Permanentmagneten 1a, 1c, oder 1a, 1d nimmt die Flussdichte des Fernfeldes des Gebers 1 mit zunehmender Entfernung zum Geber 1 rapide ab (siehe Kurve A in Fig. 4). Somit kann ein für die Bedienvorrichtung vorgesehener Kompass 3 sehr nahe am Geber 1 positioniert werden, ohne dass dieser durch den Geber 1 gestört werden würde. Eine Entfernung zwischen Kompass 3 und Geber 1 kann daher zwischen 10 cm und 30 cm betragen.

### Bezugszeichen

- 1: Geber
- 1a: Permanentmagnet
- 1b: Permanentmagnet
- 1c: Permanentmagnet
- 1d: Permanentmagnet
- 2: Sensoranordnung
- 2a: magnetfeldsensitiver Bereich
- 2b: Schaltungsträger
- 3: Kompass
- 4: Welle, Stellelement
- 5: Bedienmittel, Hebel

- A: Linie
- B: Linie
- X: Linie

- L: Drehachse

## Patentansprüche

1. Permanentmagnetischer Geber (1) für eine Sensorvorrichtung, aufweisend einen ersten Permanentmagnet (1a) und einen damit verbundenen zweiten Permanentmagnet (1b, 1c, 1d),
wobei der erste Permanentmagnet (1a) auf einer Ausrichtungsebene von dem zweiten Permanentmagneten (1b, 1c, 1d) umgeben ist,
wobei der erste Permanentmagnet (1a) ein erstes Magnetfeld mit einer ersten Ausrichtung in der Ausrichtungsebene aufweist und der zweite Permanentmagnet (1b, 1c, 1d) ein zweites Magnetfeld mit einer zweiten Ausrichtung in der Ausrichtungsebene aufweist,
wobei die erste Ausrichtung der zweiten Ausrichtung entgegengesetzt ist,
**dadurch gekennzeichnet, dass**
• der erste und zweite Permanentmagnet (1a, 1b, 1c, 1d) im Wesentlichen dasselbe magnetische Dipolmoment aufweisen, und/oder
• der ersten und zweite Permanentmagnet (1a, 1c, 1d) auf der Ausrichtungsebene voneinander beabstandet angeordnet sind.

2. Geber (1) nach Anspruch 1, wobei der erste und zweite Permanentmagnet (1a, 1b, 1c, 1d) aus demselben Werkstoff bestehen.

3. Geber (1) nach Anspruch 1, wobei der erste und zweite Permanentmagnet (1a, 1b, 1c, 1d) aus zueinander unterschiedlichen Werkstoffen bestehen.

4. Geber (1) nach Anspruch 3, wobei einer des ersten und zweiten Permanentmagneten (1a, 1b, 1c, 1d) aus Ferrit besteht und der Andere des ersten und zweiten Permanentmagneten (1a, 1b, 1c, 1d) aus NdFeB besteht.

5. Geber (1) nach einem der vorhergehenden Ansprüche, wobei der erste Permanentmagnet (1a) scheibenförmig ausgebildet ist und der zweite Permanentmagnet (1b, 1c, 1d) ringförmig ausgebildet ist, und
wobei die Permanentmagnete (1a, 1b, 1c, 1d) flach auf der Ausrichtungsebene angeordnet sind, und
der zweite Permanentmagnet (1b, 1c, 1d) den ersten Permanentmagnet (1a) auf der Ausrichtungsebene umgibt.

6. Sensorvorrichtung, aufweisend eine Sensoranordnung (2) und einen zur Sensoranordnung (2) beabstandeten und relativ dazu beweglichen permanentmagnetischen Geber (1), wobei die Sensoranordnung (2) zur Sensierung des Magnetfelds des Gebers (1) ausgebildet ist, **dadurch gekennzeichnet, dass** der permanentmagnetische Geber (1) nach einem der vorhergehenden Ansprüche ausgebildet ist.

7. Sensorvorrichtung nach Anspruch 6, wobei die Sensoranordnung (2) genau einen magnetfeldsensitiven Bereich (2a) zur Ermittlung der Magnetfeldrichtung des Gebers (1) aufweist.

8. Bedienvorrichtung zur Bedienung eines Fahrzeugs, aufweisend ein bewegliches Stellelement (4),
**dadurch gekennzeichnet, dass** die Bedienvorrichtung zur Ermittlung einer Stellposition des Stellelements (4)
• einen permanentmagnetischen Geber (1) nach einem der Ansprüche 1 bis 5 aufweist, oder
• eine Sensorvorrichtung nach einem der Ansprüche 6 bis 7 aufweist.

9. Bedienvorrichtung nach Anspruch 8, aufweisend einen Kompass (3), wobei der Abstand zwischen dem Kompass (3) und dem Geber (1) 10 cm bis 30 cm beträgt.

## Claims

1. Permanent-magnetic encoder (1) for a sensor apparatus, having a first permanent magnet (1a) and connected thereto a second permanent magnet (1b, 1c, 1d), wherein the first permanent magnet (1a) is surrounded by the second permanent magnet (1b, 1c, 1d) on an orientation plane,
wherein the first permanent magnet (1a) has a first magnetic field with a first orientation in the orientation plane and the second permanent magnet (1b, 1c, 1d) has a second magnetic field with an orientation in the orientation plane,
wherein the first orientation is opposite to the second orientation,
**characterized in that**
• the first and second permanent magnets (1a, 1b, 1c, 1d) have substantially the same magnetic dipole moment, and/or
• the first and second permanent magnets (1a, 1c, 1d) are arranged with a mutual distance on the orientation plane.

2. Encoder (1) according to Claim 1, wherein the first and second permanent magnets (1a, 1b, 1c, 1d) consist of the same material.

3. Encoder (1) according to Claim 1, wherein the first and second permanent magnets (1a, 1b, 1c, 1d) consist of materials that differ from one another.

4. Encoder (1) according to Claim 3, wherein one of the first and second permanent magnets (1a, 1b, 1c, 1d) consists of ferrite and the other of the first and second permanent magnets (1a, 1b, 1c, 1d) consists of NdFeB.

5. Encoder (1) according to any of the preceding claims, wherein the first permanent magnet (1a) is in the form of a disc and the second permanent magnet (1b, 1c, 1d) is in the form of a ring, and
wherein the permanent magnets (1a, 1b, 1c, 1d) are arranged flat on the orientation plane, and
the second permanent magnet (1b, 1c, 1d) surrounds the first permanent magnet (1a) on the orientation plane.

6. Sensor apparatus having a sensor arrangement (2) and, at a distance from the sensor arrangement (2) and movable relative thereto, a permanent-magnetic encoder (1), wherein the sensor arrangement (2) is configured for sensing the magnetic field of the encoder (1), **characterized in that**
the permanent-magnetic encoder (1) is embodied according to any of the preceding claims.

7. Sensor apparatus according to Claim 6, wherein the sensor arrangement (2) has exactly one magnetic-field-sensitive region (2a) for ascertaining the magnetic field direction of the encoder (1).

8. Operating apparatus for operating a vehicle, having a movable actuation element (4),
**characterized in that** the operating apparatus has, for ascertaining an actuation position of the actuation element (4),
• a permanent-magnetic encoder (1) according to any of Claims 1 to 5, or
• a sensor apparatus according to any of Claims 6 to 7.

9. Operating apparatus according to Claim 8, having a compass (3), wherein the distance between the compass (3) and the encoder (1) is 10 cm to 30 cm.

## Revendications

1. Encodeur à aimants permanents (1) pour un dispositif capteur, présentant un premier aimant permanent (1a) et un deuxième aimant permanent (1b, 1c, 1d) relié à celui-ci,
dans lequel le premier aimant permanent (1a) est entouré par le deuxième aimant permanent (1b, 1c, 1d) sur un plan d'orientation,
dans lequel le premier aimant permanent (1a) présente un premier champ magnétique d'une première orientation dans le plan d'orientation, et le deuxième aimant permanent (1b, 1c, 1d) présente un deuxième champ magnétique d'une deuxième orientation dans le plan d'orientation,
dans lequel la première orientation est opposée à la deuxième orientation,
**caractérisé en ce que**
• le premier et le deuxième aimant permanent (1a, 1b, 1c, 1d) présentent substantiellement le même moment dipolaire magnétique, et/ou
• le premier et le deuxième aimant permanent (1a, 1c, 1d) sont disposés à distance l'un de l'autre sur le plan d'orientation.

2. Encodeur (1) selon la revendication 1, dans lequel le premier et le deuxième aimant permanent (1a, 1b, 1c, 1d) sont composés du même matériau.

3. Encodeur (1) selon la revendication 1, dans lequel le premier et le deuxième aimant permanent (1a, 1b, 1c, 1d) sont composés de matériaux différents entre eux.

4. Encodeur (1) selon la revendication 3, dans lequel l'un du premier et du deuxième aimant permanent (1a, 1b, 1c, 1d) est composé de ferrite et l'autre du premier et du deuxième aimant permanent (1, 1b, 1c, 1d) est composé de NdFeB.

5. Encodeur (1) selon l'une quelconque des revendications précédentes, dans lequel le premier aimant permanent (1a) est réalisé en forme de disque, et le deuxième aimant permanent (1b, 1c, 1d) est réalisé en forme d'anneau, et
dans lequel les aimants permanents (1a, 1b, 1c, 1d) sont disposés à plat sur le plan d'orientation, et
le deuxième aimant permanent (1b, 1c, 1d) entoure le premier aimant permanent (1a) sur le plan d'orientation.

6. Dispositif capteur, présentant un agencement de capteur (2) et un encodeur à aimants permanents (1) espacé de l'agencement de capteur (3) et mobile par rapport à celui-ci, dans lequel l'agencement de capteur (2) est réalisé pour détecter le champ magnétique de l'encodeur (1),
**caractérisé en ce que** l'encodeur à aimants permanents (1) est réalisé selon l'une quelconque des revendications précédentes.

7. Dispositif capteur selon la revendication 6, dans lequel l'agencement de capteur (2) présente exactement une zone sensible aux champs magnétiques (2a) pour déterminer la direction de champ magnétique de l'encodeur (1).

8. Dispositif de commande permettant d'utiliser un véhicule, présentant un élément de réglage (4) mobile,
**caractérisé en ce que** le dispositif de commande présente pour la détermination d'une position de réglage de l'élément de réglage (4)
• un encodeur à aimants permanents (1) selon l'une quelconque des revendications 1 à 5, ou
• un dispositif capteur selon l'une quelconque des revendications 6 à 7.

9. Dispositif de commande selon la revendication 8, présentant une boussole (3), dans lequel la distance entre la boussole (3) et l'encodeur (1) mesure de 10 cm à 30 cm.
